# EUROPEAN PATENT APPLICATION

(11) **EP 3 119 153 A1**
(43) Date of publication of application: **18.01.2017**
(21) Application number: 14885286.6
(22) Date of filing: 05.09.2014
(51) Int. Cl.: H04W 74/08

(54) **METHOD AND SYSTEM FOR SENDING WIRELESS FRAME**

(30) Priority: 14.03.2014 CN 201410095956
(71) Applicant: ZTE Corporation, Shenzhen, Guangdong 518057 (CN)
(72) Inventor: TIAN, Kaibo, Shenzhen Guangdong 518057 (CN); XING, Weimin, Shenzhen Guangdong 518057 (CN); SUN, Bo, Shenzhen Guangdong 518057 (CN); YAO, Ke, Shenzhen Guangdong 518057 (CN)
(74) Representative: Mozzi, Matteo
(86) International application number: PCT/CN2014/086064
(87) International publication number: WO 2015/135311

(57) **Abstract**

A method and system for sending a radio frame are provided. In the method, a first Personal basic service set Control Point (PCP)/Access Point (AP) sends indication information to a second PCP/AP, wherein the indication information is used for notifying the second PCP/AP to send a first radio frame containing network signalling information over a primary channel of the first PCP/AP, and working channels of the first PCP/AP are divided into the primary channel and a secondary channel; and the second PCP/AP sends the first radio frame over the primary channel according to the indication information. According to the technical solution, time-frequency space-domain resources of a network can be reasonably scheduled and allocated, thereby reducing the mutual interference and improving the resource utilization rate.

## Description

### Technical Field

The present disclosure relates to the field of communications, and in particular to a method and system for sending a radio frame.

### Background

At present, in the field of wireless networks, with the rapid development of Wireless Local Area Network (WLAN), a global WLAN coverage demand is continuously increasing. The Institute of Electrical and Electronic Engineers (IEEE802.11) working group successively defines a series of WLAN technical standards such as 802.11 a, 802.11 b, 802.11 g and 802.11 n, and mainly regulates specifications of a Physical Layer (PHY) and a Media Access Control (MAC) layer. A basic framework of the standard-based WLAN refers to a Basic Service Set (BSS) containing an Access Point (AP) and a plurality of Stations (STA) associated with the AP.

One of the next-generation evolution standards of IEEE802.11n mainly aims at a 60GHz application frequency band and provides four independent 2.16GHz channels, each having a 2.16GHz working channel bandwidth. In the standard, on the basis of an original basic framework, a concept of a Personal Basic Service Set (PBSS) is introduced. The PBSS is an ad hoc network. One control node namely a PBSS Control Point (PCP) is deployed in the PBSS. A beacon frame sent by the PCP can maintain PBSS synchronization. The network also contains non-PCP STAs, and the non-PCP STAs can directly perform communication.

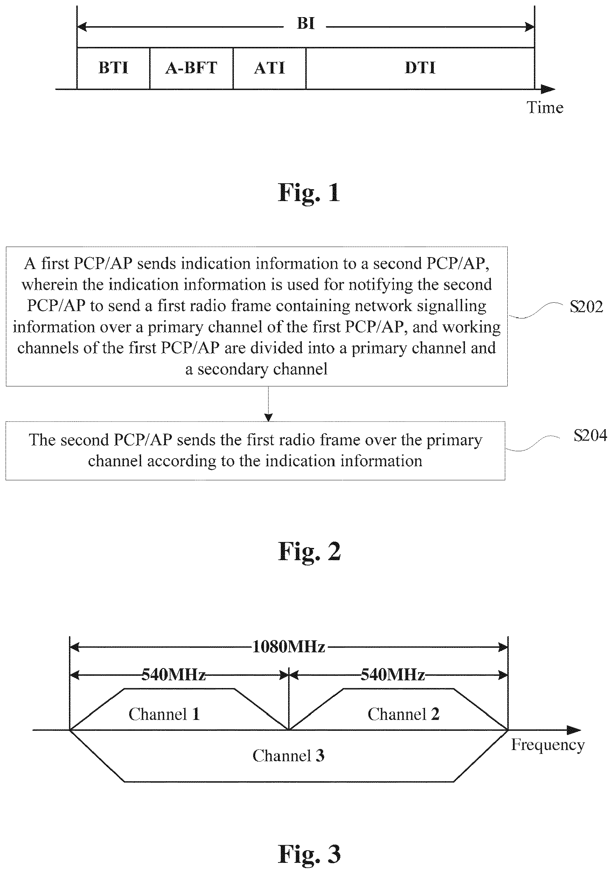

In IEEE802.11ad, a Time Division Duplex (TDD) working mode is adopted, and a PCP/AP divides one Beacon Interval (BI) into several periods configured for different functions. Fig. 1 is a diagram illustrating an Enhanced Distributed Channel Access (EDCA) according to the related art. As shown in Fig. 1, a Beacon Transmission Interval (BTI) is configured to be used by the PCP/AP for sending a Beacon frame. An Association Beam Forming Training (A-BFT) is configured for performing beam forming training between a PCP/AP and a non-PCP/non-AP STA. An Announcement Transmission Interval (ATI) is configured for the interaction of a management frame or a control frame between a PCP/AP and a non-PCP/non-AP STA. A Data Transfer Interval (DTI) is configured for data transmission between a PCP/AP and a non-PCP/non-AP STA or between different non-PCP/non-AP STAs.

In 2012, an IEEE802.11aj task group was founded, which was in charge of revising an IEEE802.11ad standard for current China 45GHz and 60GHz frequency bands. In the second half of 2013, the Ministry of Industry and Information Technology of China released a 45GHz frequency band spectrum using rule for China, specifically embodied as follows.
(1) Working frequency ranges are 42.3 to 47.0GHz and 47.2 to 48.4GHz; and
(2) Channel bandwidths are 1080MHz and 540MHz.

Table 1 shows channel configurations of a wireless broadband access system having a frequency band of 40 to 50GHz. As shown in Table 1,

**Table 1**

| Channel bandwidth (MHz) | Channel number n | Central frequency fn(GHz) |
|---|---|---|
| 1080 | 1,2,3,4 | 43.065+1.08(n-1) |
| | 5 | 47.800 |
| 540 | 1,2,...,8 | 42.795+0.54(n-1) |
| | 9,10 | 47.530+0.54(n-9) |

Under the above rule, two working bandwidth devices, i.e., devices supporting a working bandwidth of 540MHz and a working bandwidth of 1080MHz (namely a device capable of supporting both 1080MHz and 540MHz), probably exist. A network establishment device or a control node in the network is a PCP/AP.

If networks established by one or more devices (PCP/AP) having a working bandwidth of 540MHz exist over two 540MHz channels within the same 1080MHz channel in the same area, when a device having a working bandwidth of 1080MHz needs to establish a working network (presumably called a network A) having a working bandwidth of 1080MHz over this 1080MHz channel, the device having the working bandwidth of 1080MHz (PCP/AP) needs to send a Beacon frame of the network A over one of the two 540MHz channels, wherein this 540MHz channel is called a primary channel of the network A, and the other 540MHz channel can be called a secondary channel of the network A.

Under the above condition, a PCP/AP working over the secondary channel of the network A and a PCP/AP working in a 1080MHz network namely the network A cannot monitor network Beacon frames sent mutually, as a consequence, the two PCP/APs may be short of mutual allocation information when network resources are allocated, and therefore strong interference between the two networks is easily caused.

### Summary

The embodiments of the present disclosure provide a method and system for sending a radio frame, which are intended to at least solve the problem in the related art that internetwork coordination cannot be performed under a network condition of multiple working bandwidths so as to reduce internetwork interference.

According to one aspect of the embodiments of the present disclosure, a method for sending a radio frame is provided.

A method for sending a radio frame according to an embodiment of the present disclosure may include that: a first PCP/AP sends indication information to a second PCP/AP, wherein the indication information is used for notifying the second PCP/AP to send a first radio frame containing network signalling information over a primary channel of the first PCP/AP, and working channels of the first PCP/AP are divided into the primary channel and a secondary channel; and the second PCP/AP sends the first radio frame over the primary channel according to the indication information.

In an exemplary embodiment, a working channel of the second PCP/AP may be the secondary channel.

In an exemplary embodiment, the indication information may be a pre-set wireless signal sent to the second PCP/AP by the first PCP/AP over the secondary channel. Or, the indication information may be carried in a pre-set field in a pre-set radio frame sent to the second PCP/AP by the first PCP/AP.

In an exemplary embodiment, the first radio frame may be one of a beacon frame sent by the second PCP/AP in a network established by the second PCP/AP, a simplified beacon frame sent by the second PCP/AP in the network established by the second PCP/AP, and a signalling notification frame sent by the second PCP/AP in the network established by the second PCP/AP.

In an exemplary embodiment, the method may further include that: the second PCP/AP sends a second radio frame over the secondary channel, so as to notify an STA in a network established by the second PCP/AP to switch a working channel of the STA from the secondary channel to the primary channel.

In an exemplary embodiment, the method may further include that: the second PCP/AP sends a second radio frame over the secondary channel, so as to notify an STA in a network established by the second PCP/AP to receive a beacon frame over the primary channel and continue to carry out A-BFT, ATI and DTI working periods over the secondary channel.

In an exemplary embodiment, the step that the second PCP/AP sends the first radio frame according to the indication information may include that: the second PCP/AP sends the beacon frame only over the primary channel; and a non-PCP/non-AP STA works only over the secondary channel, wherein the non-PCP/non-AP STA is an STA which has been added to the network established by the second PCP/AP.

In an exemplary embodiment, the method may further include that: a non-PCP/non-AP STA monitors the first radio frame sent by the second PCP/AP over the primary channel, wherein the non-PCP/non-AP STA is an STA to be added to the network established by the second PCP/AP; and the non-PCP/non-AP STA executes a network adding process together with the second PCP/AP over the secondary channel according to the monitored first radio frame.

According to another aspect of the embodiments of the present disclosure, a system for sending a radio frame is provided.

A system for sending a radio frame according to an embodiment of the present disclosure may include: a first PCP/AP and a second PCP/AP. The first PCP/AP may be configured to send indication information to a second PCP/AP, wherein the indication information is used for notifying the second PCP/AP to send a first radio frame containing network signalling information over a primary channel of the first PCP/AP, and working channels of the first PCP/AP are divided into the primary channel and a secondary channel. The second PCP/AP may be configured to send the first radio frame over the primary channel according to the indication information.

In an exemplary embodiment, a working channel of the second PCP/AP may be the secondary channel.

In an exemplary embodiment, the indication information may be a pre-set wireless signal sent to the second PCP/AP by the first PCP/AP over the secondary channel. Or, the indication information may be carried in a pre-set field in a pre-set radio frame sent to the second PCP/AP by the first PCP/AP.

In an exemplary embodiment, the first radio frame may be one of a beacon frame sent by the second PCP/AP in a network established by the second PCP/AP, a simplified beacon frame sent by the second PCP/AP in the network established by the second PCP/AP, and a signalling notification frame sent by the second PCP/AP in the network established by the second PCP/AP.

In an exemplary embodiment, the second PCP/AP may be further configured to send a second radio frame over the secondary channel, so as to notify an STA in a network established by the second PCP/AP to switch a working channel of the STA from the secondary channel to the primary channel.

In an exemplary embodiment, the second PCP/AP may be further configured to send a second radio frame over the secondary channel, so as to notify an STA in a network established by the second PCP/AP to receive a beacon frame over the primary channel and continue to carry out A-BFT, ATI and DTI working periods over the secondary channel.

In an exemplary embodiment, the system may further include: a non-PCP/non-AP STA. The second PCP/AP may be further configured to send the beacon frame only over the primary channel. The non-PCP/non-AP STA may be configured to work only over the secondary channel, wherein the non-PCP/non-AP STA is an STA which has been added to the network established by the second PCP/AP.

In an exemplary embodiment, a non-PCP/non-AP STA may be further configured to monitor the first radio frame sent by the second PCP/AP over the primary channel, wherein the non-PCP/non-AP STA is an STA to be added to the network established by the second PCP/AP. The non-PCP/non-AP STA may be further configured to execute a network adding process together with the second PCP/AP over the secondary channel according to the monitored first radio frame.

By means of the embodiments of the present disclosure, working channels of a first PCP/AP are divided into a primary channel and a secondary channel, and the first PCP/AP sends indication information to a second PCP/AP, wherein the indication information is used for notifying the second PCP/AP to send a first radio frame containing network signalling information over the primary channel of the first PCP/AP; and the second PCP/AP sends the first radio frame over the primary channel according to the indication information. In this way, PCPs/APs using the same channel in the same area can inform each other, via the indication information, a manner of sending the radio frame. Thus, the problem in the related art that internetwork coordination cannot be performed under a network condition of multiple working bandwidths so as to reduce internetwork interference is solved, such that time-frequency space-domain resources of a network can be reasonably scheduled and allocated, thereby reducing the mutual interference and improving the resource utilization rate.

### Brief Description of the Drawings

The drawings illustrated herein are used to provide further understanding of the embodiments of the present disclosure, and form a part of the present disclosure. The schematic embodiments and illustrations of the present disclosure are used to explain the present disclosure, and do not form improper limits to the present disclosure. In the drawings:
Fig. 1 is a diagram illustrating an EDCA according to the related art;
Fig. 2 is a flowchart showing a method for sending a radio frame according to an embodiment of the present disclosure;
Fig. 3 is a diagram illustrating frequency positions of three channels according to an exemplary embodiment of the present disclosure;
Fig. 4 is a structural diagram illustrating a system for sending a radio frame according to an embodiment of the present disclosure; and
Fig. 5 is a structural diagram illustrating a system for sending a radio frame according to an exemplary embodiment of the present disclosure.

### Detailed Description of the Embodiments

The present disclosure will be illustrated below with reference to the drawings and the embodiments in detail. It is important to note that the embodiments of the present disclosure and the characteristics in the embodiments can be combined under the condition of no conflicts.

Fig. 2 is a flowchart showing a method for sending a radio frame according to an embodiment of the present disclosure. As shown in Fig. 2, the method may include the processing steps as follows.

Step S202: A first PCP/AP sends indication information to a second PCP/AP, wherein the indication information is used for notifying the second PCP/AP to send a first radio frame containing network signalling information over a primary channel of the first PCP/AP, and working channels of the first PCP/AP are divided into the primary channel and a secondary channel.

Step S204: The second PCP/AP sends the first radio frame over the primary channel according to the indication information.

The problem that internetwork coordination cannot be performed under a network condition of multiple working bandwidths so as to reduce internetwork interference exists in the related art. By means of the method shown in Fig. 2, working channels of a first PCP/AP may be divided into a primary channel and a secondary channel, and the first PCP/AP sends indication information to a second PCP/AP, wherein the indication information is used for notifying the second PCP/AP to send a first radio frame containing network signalling information over the primary channel of the first PCP/AP; and the second PCP/AP sends the first radio frame over the primary channel according to the indication information, that is, the PCPs/APs using the same channel in the same area can inform each other, via the indication information, a manner of sending the radio frame. Thus, the problem in the related art that internetwork coordination cannot be performed under a network condition of multiple working bandwidths so as to reduce internetwork interference is solved, such that time-frequency space-domain resources of a network can be reasonably scheduled and allocated, thereby reducing the mutual interference and improving the resource utilization rate.

In an exemplary implementation process, a working channel of the second PCP/AP is the secondary channel.

In an exemplary embodiment, the indication information may be a pre-set wireless signal sent to the second PCP/AP by the first PCP/AP over the secondary channel. Or, the indication information may be carried in a pre-set field in a pre-set radio frame sent to the second PCP/AP by the first PCP/AP.

In an exemplary embodiment, the first radio frame may be, but is not limited to, one of:
(1) a beacon frame sent by the second PCP/AP in a network established by the second PCP/AP;
(2) a simplified beacon frame sent by the second PCP/AP in the network established by the second PCP/AP; and
(3) a signalling notification frame sent by the second PCP/AP in the network established by the second PCP/AP.

In an exemplary embodiment, the method may further include the operation as follows.

Step S1: The second PCP/AP sends a second radio frame over the secondary channel, so as to notify an STA in a network established by the second PCP/AP to switch a working channel of the STA from the secondary channel to the primary channel.

In an exemplary embodiment, the method may further include the step as follows.

Step S2: The second PCP/AP sends a second radio frame over the secondary channel, so as to notify an STA in a network established by the second PCP/AP to receive a beacon frame over the primary channel and continue to carry out A-BFT, ATI and DTI working periods over the secondary channel.

In an exemplary embodiment, in Step S204 that the second PCP/AP sends the radio frame according to the indication information may include the operations as follows.

Step S3: The second PCP/AP sends the beacon frame only over the primary channel.

Step S4: A non-PCP/non-AP STA works only over the secondary channel, wherein the non-PCP/non-AP STA is an STA which has been added to the network established by the second PCP/AP.

In an exemplary embodiment, the method may further include the steps as follows.

Step S5: A non-PCP/non-AP STA monitors the first radio frame sent by the second PCP/AP over the primary channel, wherein the non-PCP/non-AP STA is an STA to be added to the network established by the second PCP/AP.

Step S6: The non-PCP/non-AP STA executes a network adding process together with the second PCP/AP over the secondary channel according to the monitored first radio frame.

The exemplary implementation process will be further described below with reference to exemplary embodiments 1 to 6.

### Exemplary embodiment 1

Fig. 3 is a diagram illustrating frequency positions of three channels according to an exemplary embodiment of the present disclosure. As shown in Fig. 3, networks established by three PCPs/APs, which can be called a PCP1/AP1, a PCP2/AP2 and a PCP3/AP3, exist in the same area, wherein the PCP1/AP1 and the PCP2/AP2 work over a channel 1, and the PCP3/AP3 works over a channel 2. The bandwidths of the channel 1 and the channel 2 are 540MHz, the channel 1 and the channel 2 are adjacent to each other, the channel 1 and the channel 2 are combined together to form a channel 3, and the bandwidth of the channel 3 is 1080MHz.

If a new PCP/AP, which can be called a PCP4/AP4, emerges in this area, and it is needed to establish a network of which the working bandwidth is 1080MHz over the channel 3, the PCP4/AP4 knows, by monitoring over the channel 1, that two networks established by the PCP1/AP1 and the PCP2/AP2 respectively exist over the channel 1, the PCP4/AP4 knows, by monitoring over the channel 2, that a network established by the PCP3/AP3 exists over the channel 2, and the working bandwidths of the three networks are 540MHz. Thereafter, the PCP4/AP4 can select the channel 1 or the channel 2 as a primary channel on its own working bandwidth according to at least one of factors such as a random-selection rule, a network load magnitude situation and the number of networks over a channel, while taking the other channel as a secondary channel.

It is assumed that the PCP4/AP4 selects the channel 2 as its own working primary channel and takes the channel 1 as the secondary channel. The PCP4/AP4 may send a Beacon frame over the channel 2 to establish a new network and send a wireless signal over the channel 1, wherein the wireless signal may be sent in a broadcast manner, or may be a multicast signal for the PCP1/AP1 and the PCP2/AP2 certainly, or may be a unicast wireless signal for the PCP1/AP1 and the PCP2/AP2 respectively. The wireless signal instructs the PCP1/AP1 and the PCP2/AP2 to send Beacon frames of respective networks over the channel 2. Alternatively, the PCP4/AP4 may send a specific field of a radio frame over the channel 1 to instruct the PCP1/AP1 and the PCP2/AP2 to send the Beacon frames of the respective networks over the channel 2.

### Exemplary embodiment 2

As shown in Fig. 3, networks established by three PCPs/APs, which can be called a PCP1/AP1, a PCP2/AP2 and a PCP3/AP3, exist in the same area, wherein the PCP1/AP1 and the PCP2/AP2 work over a channel 1, and the PCP3/AP3 works over a channel 2. The bandwidths of the channel 1 and the channel 2 are 540MHz, the channel 1 and the channel 2 are adjacent to each other, the channel 1 and the channel 2 are combined together to form a channel 3, and the bandwidth of the channel 3 is 1080MHz.

If a new PCP/AP, which can be called a PCP4/AP4, emerges in this area, and it is needed to establish a network of which the working bandwidth is 1080MHz over the channel 3, the PCP4/AP4 knows, by monitoring over the channel 1, that two networks established by the PCP1/AP1 and the PCP2/AP2 respectively exist over the channel 1, the PCP4/AP4 knows, by monitoring over the channel 2, that a network established by the PCP3/AP3 exists over the channel 2, and the working bandwidths of the three networks are 540MHz. Thereafter, the PCP4/AP4 may select the channel 1 or the channel 2 as a primary channel on its own working bandwidth according to at least one of factors such as a random-selection rule, a network load magnitude situation and the number of networks over a channel, while taking the other channel as a secondary channel.

It is assumed that the PCP4/AP4 selects the channel 2 as its own working primary channel and takes the channel 1 as the secondary channel. The PCP4/AP4 may send a Beacon frame over the channel 2 to establish a new network and send a wireless signal over the channel 1, wherein the wireless signal may be sent in a broadcast manner, or may be a multicast signal for the PCP1/AP1 and the PCP2/AP2 certainly, or may be a unicast wireless signal for the PCP1/AP1 and the PCP2/AP2 respectively. The wireless signal instructs the PCP1/AP1 and the PCP2/AP2 to send Beacon frames of respective networks over the channel 2.

After receiving the wireless signal sent by the PCP4/AP4, the PCP1/AP1 may send the Beacon frame of its own network over the channel 2, and the PCP1/AP1 maintains a normal network operation over the channel 1.

After receiving the wireless signal sent by the PCP4/AP4, the PCP2/AP2 may send the Beacon frame of its own network over the channel 2, and the PCP2/AP2 maintains a normal network operation over the channel 1.

### Exemplary embodiment 3

As shown in Fig. 3, networks established by three PCPs/APs, which can be called a PCP1/AP1, a PCP2/AP2 and a PCP3/AP3, exist in the same area, wherein the PCP1/AP1 and the PCP2/AP2 work over a channel 1, and the PCP3/AP3 works over a channel 2. The bandwidths of the channel 1 and the channel 2 are 540MHz, the channel 1 and the channel 2 are adjacent to each other, the channel 1 and the channel 2 are combined together to form a channel 3, and the bandwidth of the channel 3 is 1080MHz.

If a new PCP/AP, which can be called a PCP4/AP4, emerges in this area, and it is needed to establish a network of which the working bandwidth is 1080MHz over the channel 3, the PCP4/AP4 knows, by monitoring over the channel 1, that two networks established by the PCP1/AP1 and the PCP2/AP2 respectively exist over the channel 1, the PCP4/AP4 knows, by monitoring over the channel 2, that a network established by the PCP3/AP3 exists over the channel 2, and the working bandwidths of the three networks are 540MHz. Thereafter, the PCP4/AP4 may select the channel 1 or the channel 2 as a primary channel on its own working bandwidth according to at least one of factors such as a random-selection rule, a network load magnitude situation and the number of networks over a channel, while taking the other channel as a secondary channel.

It is assumed that the PCP4/AP4 selects the channel 2 as its own working primary channel and takes the channel 1 as the secondary channel. The PCP4/AP4 may send a Beacon frame over the channel 2 to establish a new network and send a wireless signal over the channel 1, wherein the wireless signal may be sent in a broadcast manner, or may be a multicast signal for the PCP1/AP1 and the PCP2/AP2 certainly, or may be a unicast wireless signal for the PCP1/AP1 and the PCP2/AP2 respectively. The wireless signal instructs the PCP1/AP1 and the PCP2/AP2 to send Beacon frames of respective networks over the channel 2.

After receiving the wireless signal sent by the PCP4/AP4, the PCP1/AP1 may send the Beacon frame of its own network over the channel 2, and the PCP1/AP1 maintains a normal network operation over the channel 1.

After receiving the wireless signal sent by the PCP4/AP4, the PCP2/AP2 sends a radio frame to a non-PCP/non-AP STA in this network over the channel 1, so as to inform the non-PCP/non-AP STA in this network that this network will operate on the channel 2, and the non-PCP/non-AP STA only needs to switch a working channel to the channel 2 in accordance with an instruction of the radio frame.

### Exemplary embodiment 4

As shown in Fig. 3, networks established by three PCPs/APs, which can be called a PCP1/AP1, a PCP2/AP2 and a PCP3/AP3, exist in the same area, wherein the PCP1/AP1 and the PCP2/AP2 work over a channel 1, and the PCP3/AP3 works over a channel 2. The bandwidths of the channel 1 and the channel 2 are 540MHz, the channel 1 and the channel 2 are adjacent to each other, the channel 1 and the channel 2 are combined together to form a channel 3, and the bandwidth of the channel 3 is 1080MHz.

If a new PCP/AP, which can be called a PCP4/AP4, emerges in this area, it is needed to establish a network of which the working bandwidth is 1080MHz over the channel 3, the PCP4/AP4 knows, by monitoring over the channel 1, that two networks established by the PCP1/AP1 and the PCP2/AP2 respectively exist over the channel 1, the PCP4/AP4 knows, by monitoring over the channel 2, that a network established by the PCP3/AP3 exists over the channel 2, and the working bandwidths of the three networks are 540MHz. Thereafter, the PCP4/AP4 may select the channel 1 or the channel 2 as a primary channel on its own working bandwidth according to at least one of factors such as a random-selection rule, a network load magnitude situation and the number of networks over a channel, while taking the other channel as a secondary channel.

It is assumed that the PCP4/AP4 selects the channel 2 as its own working primary channel and takes the channel 1 as the secondary channel. The PCP4/AP4 may send a Beacon frame over the channel 2 to establish a new network and send a wireless signal over the channel 1, wherein the wireless signal may be sent in a broadcast manner, or may be a multicast signal for the PCP1/AP1 and the PCP2/AP2 certainly, or may be a unicast wireless signal for the PCP1/AP1 and the PCP2/AP2 respectively. The wireless signal instructs the PCP1/AP1 and the PCP2/AP2 to send Beacon frames of respective networks over the channel 2.

After receiving the wireless signal sent by the PCP4/AP4, the PCP1/AP1 sends a radio frame to a non-PCP/non-AP STA in this network over the channel 1, so as to inform the non-PCP/non-AP STA in this network that a BTI stage of this network will be carried out over the channel 2. In the BTI stage, the PCP1/AP1 switches to the channel 2 to send a Beacon frame, and the non-PCP/non-AP STA switches to the channel 2 to receive the Beacon frame. In other stages in a BI, for instance, an A-BFT, an ATI and a DTI, the operations will be still carried out over the channel 1, and the PCP1/AP1 and the non-PCP/non-AP STA in the network will switch to the channel 1 to work over the channel 1.

After receiving the wireless signal sent by the PCP4/AP4, the PCP2/AP2 sends a radio frame to the non-PCP/non-AP STA in this network over the channel 1, so as to inform the non-PCP/non-AP STA in this network that this network will operate on the channel 2, and the non-PCP/non-AP STA in this network only needs to switch a working channel to the channel 2 in accordance with an instruction of the radio frame.

### Exemplary embodiment 5

As shown in Fig. 3, networks established by three PCPs/APs, which can be called a PCP1/AP1, a PCP2/AP2 and a PCP3/AP3, exist in the same area, wherein the PCP1/AP1 and the PCP2/AP2 work over a channel 1, and the PCP3/AP3 works over a channel 2. The bandwidths of the channel 1 and the channel 2 are 540MHz, the channel 1 and the channel 2 are adjacent to each other, the channel 1 and the channel 2 are combined together to form a channel 3, and the bandwidth of the channel 3 is 1080MHz.

If a new PCP/AP, which can be called a PCP4/AP4, emerges in this area, it is needed to establish a network of which the working bandwidth is 1080MHz over the channel 3, the PCP4/AP4 knows, by monitoring over the channel 1, that two networks established by the PCP1/AP1 and the PCP2/AP2 respectively exist over the channel 1, the PCP4/AP4 knows, by monitoring over the channel 2, that a network established by the PCP3/AP3 exists over the channel 2, and the working bandwidths of the three networks are 540MHz. Thereafter, the PCP4/AP4 may select the channel 1 or the channel 2 as a primary channel on its own working bandwidth according to at least one of factors such as a random-selection rule, a network load magnitude situation and the number of networks over a channel, while taking the other channel as a secondary channel.

It is assumed that the PCP4/AP4 selects the channel 2 as its own working primary channel and takes the channel 1 as the secondary channel. The PCP4/AP4 may send a Beacon frame over the channel 2 to establish a new network and send a wireless signal over the channel 1, wherein the wireless signal may be sent in a broadcast manner, or may be a multicast signal for the PCP1/AP1 and the PCP2/AP2 certainly, or may be a unicast wireless signal for the PCP1/AP1 and the PCP2/AP2 respectively. The wireless signal instructs the PCP1/AP1 and the PCP2/AP2 to send Beacon frames of respective networks over the channel 2.

After receiving the wireless signal sent by the PCP4/AP4, the PCP1/AP1 sends a radio frame to a non-PCP/non-AP STA in this network over the channel 1, so as to inform the non-PCP/non-AP STA in this network that the PCP1/AP1 will send a Beacon frame over the channel 1. A BTI stage will not be carried out over the channel 2 in this network, and the non-PCP/non-AP STA in this network only needs to work over the channel 2 without the necessity of switching to the channel 1 to receive the Beacon frame. Information contained in the Beacon frame is sent in an A-BFT stage or an ATI stage via the channel 1. The information may be sent by adopting the Beacon frame or may be sent by adopting a management frame or a control frame in other formats.

After receiving the wireless signal sent by the PCP4/AP4, the PCP2/AP2 sends a radio frame to the non-PCP/non-AP STA in this network over the channel 1, so as to inform the non-PCP/non-AP STA in this network that this network will operate on the channel 2, and the non-PCP/non-AP STA only needs to switch a working channel to the channel 2 in accordance with an instruction of the radio frame.

### Exemplary embodiment 6

As shown in Fig. 3, networks established by three PCPs/APs, which can be called a PCP1/AP1, a PCP2/AP2 and a PCP3/AP3, exist in the same area, wherein the PCP1/AP1 and the PCP2/AP2 work over a channel 1, and the PCP3/AP3 works over a channel 2. The bandwidths of the channel 1 and the channel 2 are 540MHz, the channel 1 and the channel 2 are adjacent to each other, the channel 1 and the channel 2 are combined together to form a channel 3, and the bandwidth of the channel 3 is 1080MHz.

If a new PCP/AP, which can be called a PCP4/AP4, emerges in this area, it is needed to establish a network of which the working bandwidth is 1080MHz over the channel 3. The PCP4/AP4 knows, by monitoring over the channel 1, that two networks established by the PCP1/AP1 and the PCP2/AP2 respectively exist over the channel 1, the PCP4/AP4 knows, by monitoring over the channel 2, that a network established by the PCP3/AP3 exists over the channel 2, and the working bandwidths of the three networks are 540MHz. Thereafter, the PCP4/AP4 may select the channel 1 or the channel 2 as a primary channel on its own working bandwidth according to at least one of factors such as a random-selection rule, a network load magnitude situation and the number of networks over a channel, while taking the other channel as a secondary channel.

It is assumed that the PCP4/AP4 selects the channel 2 as its own working primary channel and takes the channel 1 as the secondary channel. The PCP4/AP4 may send a Beacon frame over the channel 2 to establish a new network and send a wireless signal over the channel 1, wherein the wireless signal may be sent in a broadcast manner, or may be a multicast signal for the PCP1/AP1 and the PCP2/AP2 certainly, or may be a unicast wireless signal for the PCP1/AP1 and the PCP2/AP2 respectively. The wireless signal instructs the PCP1/AP1 and the PCP2/AP2 to send Beacon frames of respective networks over the channel 2, or the PCP4/AP4 may send a specific field of a radio frame over the channel 1 to instruct the PCP1/AP1 and the PCP2/AP2 to send the Beacon frames of the respective networks over the channel 2.

After receiving the wireless signal sent by the PCP4/AP4, the PCP1/AP1 sends a radio frame to a non-PCP/non-AP STA in this network over the channel 1, so as to inform the non-PCP/non-AP STA in this network that the PCP1/AP1 sends a Beacon frame over the channel 2. A BTI stage will not be carried out over the channel 1 in this network, the non-PCP/non-AP STA in this network only needs to work over the channel 1 without the necessity of switching to the channel 2 to receive the Beacon frame. Information contained in the Beacon frame will be sent in an A-BFT stage or an ATI stage via the channel 1. The information may be sent by adopting the Beacon frame or may be sent by adopting a management frame or a control frame in other formats.

Before a non-PCP/non-AP STA which is not added to a network established by the PCP1/AP1 is added to the network established by the PCP1/AP1, it is only needed to monitor a Beacon frame over the channel 2 and then to interact, with the PCP1/AP1 over the channel 1, a radio frame of accessing the network.

After receiving the wireless signal sent by the PCP4/AP4, the PCP2/AP2 sends a radio frame to the non-PCP/non-AP STA in this network over the channel 1, so as to inform the non-PCP/non-AP STA in this network that this network will operate on the channel 2, and the non-PCP/non-AP STA only needs to switch a working channel to the channel 2 in accordance with an instruction of the radio frame.

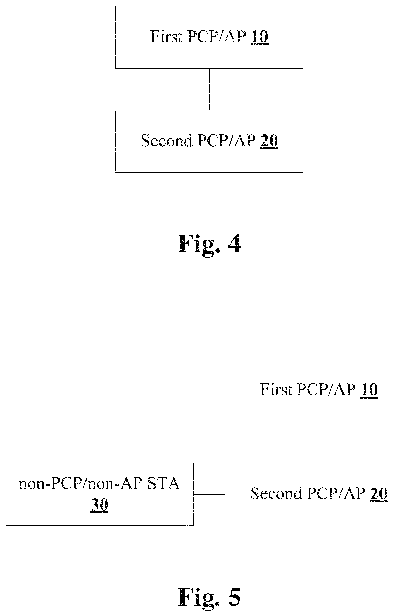

Fig. 4 is a structural diagram illustrating a system for sending a radio frame according to an embodiment of the present disclosure. As shown in Fig. 4, the system for sending a radio frame may include: a first PCP/AP 10 and a second PCP/AP 20. The first PCP/AP 10 is configured to send indication information to a second PCP/AP, wherein the indication information is used for notifying the second PCP/AP to send a first radio frame containing network signalling information over a primary channel of the first PCP/AP, and working channels of the first PCP/AP are divided into the primary channel and a secondary channel. The second PCP/AP 20 is configured to send the first radio frame over the primary channel according to the indication information.

By means of the system shown in Fig. 4, the problem in the related art that internetwork coordination cannot be performed under a network condition of multiple working bandwidths so as to reduce internetwork interference is solved, such that time-frequency space-domain resources of a network can be reasonably scheduled and allocated, thereby reducing the mutual interference and improving the resource utilization rate.

In an exemplary implementation process, a working channel of the second PCP/AP is the secondary channel.

In an exemplary embodiment, the indication information may be a pre-set wireless signal sent to the second PCP/AP by the first PCP/AP over the secondary channel. Or, the indication information may be carried in a pre-set field in a pre-set radio frame sent to the second PCP/AP by the first PCP/AP.

In an exemplary embodiment, the first radio frame may be, but is not limited to, one of:
(1) a beacon frame sent by the second PCP/AP in a network established by the second PCP/AP;
(2) a simplified beacon frame sent by the second PCP/AP in the network established by the second PCP/AP; and
(3) a signalling notification frame sent by the second PCP/AP in the network established by the second PCP/AP.

In an exemplary embodiment, the second PCP/AP 20 is further configured to send a second radio frame over the secondary channel, so as to notify an STA in a network established by the second PCP/AP to switch a working channel of the STA from the secondary channel to the primary channel.

In an exemplary embodiment, the second PCP/AP 20 is further configured to send a second radio frame over the secondary channel, so as to notify an STA in a network established by the second PCP/AP to receive a beacon frame over the primary channel and continue to carry out A-BFT, ATI and DTI working periods over the secondary channel.

In an exemplary embodiment, as shown in Fig. 5, the system may further include: a non-PCP/non-AP STA 30. The second PCP/AP 20 is further configured to send the beacon frame only over the primary channel. The non-PCP/non-AP STA 30 is configured to work only over the secondary channel, wherein the non-PCP/non-AP STA is an STA which has been added to the network established by the second PCP/AP.

In an exemplary embodiment, the non-PCP/non-AP STA 30 is further configured to monitor the first radio frame sent by the second PCP/AP over the primary channel, wherein the non-PCP/non-AP STA is an STA to be added to the network established by the second PCP/AP. The non-PCP/non-AP STA 30 is further configured to execute a network adding process together with the second PCP/AP over the secondary channel according to the monitored first radio frame.

From the above descriptions, it can be seen that the above embodiments achieve the technical effects (it is important to note that these effects may be effects which can be achieved by some exemplary embodiments) as follows. By means of the technical solution provided by the embodiments of the present disclosure, PCPs/APs using the same channel in the same area can monitor respective beacon frames mutually, thereby reasonably scheduling and allocating time-frequency space-domain resources of a network, reducing the mutual interference and improving the resource utilization rate.

Obviously, those skilled in the art shall understand that all modules or all steps in the present disclosure can be implemented using a general calculation apparatus, can be centralized on a single calculation apparatus or can be distributed on a network composed of a plurality of calculation apparatuses. Optionally, they can be implemented using executable program codes of the calculation apparatuses. Thus, they can be stored in a storage apparatus and executed by the calculation apparatuses, the shown or described steps can be executed in a sequence different from this sequence under certain conditions, or they are manufactured into each integrated circuit module respectively, or a plurality of modules or steps therein are manufactured into a single integrated circuit module. Thus, the present disclosure is not limited to a combination of any specific hardware and software.

The above is only the exemplary embodiments of the present disclosure, and is not used to limit the present disclosure. There can be various modifications and variations in the present disclosure for those skilled in the art. Any modifications, equivalent replacements, improvements and the like within the principle of the present disclosure shall fall within the protection scope defined by the appended claims of the present disclosure.

### Industrial Applicability

As above, the method and system for sending a radio frame provided by the embodiments of the present disclosure have the beneficial effects as follows. PCPs/APs using the same channel in the same area can monitor respective beacon frames mutually, thereby reasonably scheduling and allocating time-frequency space-domain resources of a network, reducing the mutual interference and improving the resource utilization rate.

## Claims

1. A method for sending a radio frame, comprising:
sending, by a first Personal basic service set Control Point, PCP/Access Point, AP, indication information to a second PCP/AP, wherein the indication information is used for notifying the second PCP/AP to send a first radio frame containing network signalling information over a primary channel of the first PCP/AP, and working channels of the first PCP/AP are divided into the primary channel and a secondary channel; and
sending, by the second PCP/AP, the first radio frame over the primary channel according to the indication information.

2. The method as claimed in claim 1, wherein a working channel of the second PCP/AP is the secondary channel, and/or a working channel of a Station, STA, in a network established by the second PCP/AP is the secondary channel.

3. The method as claimed in claim 1, wherein the indication information is a pre-set wireless signal sent to the second PCP/AP by the first PCP/AP over the secondary channel; or, the indication information is carried in a pre-set field in a pre-set radio frame sent to the second PCP/AP by the first PCP/AP.

4. The method as claimed in claim 1, wherein the first radio frame is one of:
a beacon frame sent by the second PCP/AP in a network established by the second PCP/AP;
a simplified beacon frame sent by the second PCP/AP in the network established by the second PCP/AP; and
a signalling notification frame sent by the second PCP/AP in the network established by the second PCP/AP.

5. The method as claimed in claim 1, further comprising: sending, by the second PCP/AP, a second radio frame over the secondary channel, so as to notify an STA in a network established by the second PCP/AP to switch a working channel of the STA from the secondary channel to the primary channel.

6. The method as claimed in claim 1, further comprising: sending, by the second PCP/AP, a second radio frame over the secondary channel, so as to notify an STA in a network established by the second PCP/AP to receive a beacon frame over the primary channel and continue to carry out Association Beam Forming Training, A-BFT, Announcement Transmission Interval, ATI, and Data Transfer Interval, DTI, working periods over the secondary channel.

7. The method as claimed in claim 4, wherein sending, by the second PCP/AP, the first radio frame according to the indication information comprises:
sending, by the second PCP/AP, the beacon frame only over the primary channel; and
working, by a non-PCP/non-AP STA, only over the secondary channel, wherein the non-PCP/non-AP STA is an STA which has been added to the network established by the second PCP/AP.

8. The method as claimed in claim 4, further comprising:
monitoring, by a non-PCP/non-AP STA, the first radio frame sent by the second PCP/AP over the primary channel, wherein the non-PCP/non-AP STA is an STA to be added to the network established by the second PCP/AP; and
executing, by the non-PCP/non-AP STA, a network adding process together with the second PCP/AP over the secondary channel according to the monitored first radio frame.

9. A system for sending a radio frame, comprising: a first Personal basic service set Control Point, PCP/Access Point, AP, and a second PCP/AP, wherein
the first PCP/AP is configured to send indication information to a second PCP/AP, the indication information being used for notifying the second PCP/AP to send a first radio frame containing network signalling information over a primary channel of the first PCP/AP, working channels of the first PCP/AP being divided into the primary channel and a secondary channel; and
the second PCP/AP is configured to send the first radio frame over the primary channel according to the indication information.

10. The system as claimed in claim 9, wherein a working channel of the second PCP/AP is the secondary channel.

11. The system as claimed in claim 9, wherein the indication information is a pre-set wireless signal sent to the second PCP/AP by the first PCP/AP over the secondary channel; or, the indication information is carried in a pre-set field in a pre-set radio frame sent to the second PCP/AP by the first PCP/AP.

12. The system as claimed in claim 9, wherein the first radio frame is one of:
a beacon frame sent by the second PCP/AP in a network established by the second PCP/AP;
a simplified beacon frame sent by the second PCP/AP in the network established by the second PCP/AP; and
a signalling notification frame sent by the second PCP/AP in the network established by the second PCP/AP.

13. The system as claimed in claim 9, wherein the second PCP/AP is further configured to send a second radio frame over the secondary channel, so as to notify an STA in a network established by the second PCP/AP to switch a working channel of the STA from the secondary channel to the primary channel.

14. The system as claimed in claim 9, wherein the second PCP/AP is further configured to send a second radio frame over the secondary channel, so as to notify an STA in a network established by the second PCP/AP to receive a beacon frame over the primary channel and continue to carry out Association Beam Forming Training, A-BFT, Announcement Transmission Interval, ATI, and Data Transfer Interval, DTI, working periods over the secondary channel.

15. The system as claimed in claim 12, further comprising: a non-PCP/non-AP STA, wherein
the second PCP/AP is further configured to send the beacon frame only over the primary channel; and
the non-PCP/non-AP STA is configured to work only over the secondary channel, wherein the non-PCP/non-AP STA is an STA which has been added to the network established by the second PCP/AP.

16. The system as claimed in claim 12, wherein
a non-PCP/non-AP STA is further configured to monitor the first radio frame sent by the second PCP/AP over the primary channel, the non-PCP/non-AP STA being an STA to be added to the network established by the second PCP/AP; and
the non-PCP/non-AP STA is further configured to execute a network adding process together with the second PCP/AP over the secondary channel according to the monitored first radio frame.
